# EUROPEAN PATENT APPLICATION

(11) **EP 0 933 665 A2**
(43) Date of publication of application: **04.08.1999**
(21) Application number: 99300661.8
(22) Date of filing: 29.01.1999
(51) Int. Cl.: G02F 1/39

(54) **Light limiter**

(30) Priority: 30.01.1998 JP 2001098
(71) Applicant: NEC CORPORATION, Tokyo (JP)
(72) Inventor: Taneda, Yasuhisa, Minato-ku, Tokyo (JP); Ogata, Takaaki, Minato-ku, Tokyo (JP); Nagata, Hirotoshi, Sumitomo Osaka Cement Co., Ltd., Funabashi-Shi, Chiba-ken (JP); Ichikawa, Junichiro, Sumitomo Osaka Cem. Co., Ltd., Funabashi-Shi, Chiba-ken (JP); Higuma, Kaoru, Sumitomo Osaka Cement. Co., Ltd., Funabashi-Shi, Chiba-ken (JP)
(74) Representative: Orchard, Oliver John

(57) **Abstract**

A light limiter (21) is described which can control the generation of an optical surge, includes few components, and has high reliability. The light limiter includes a parametric amplification element (22) for parametrically amplifying an input signal light, and a wavelength selection element (23) for removing a wavelength component excepting a specified wavelength, from among the signal light output from the parametric amplification element.

## Description

The present invention relates to a light limiter. A light limiter which removes the high output signal light component of pulses (abbreviated as an optical surge) secondarily generated in a optical amplification process will be described below, by way of example, in illustration of the invention.

Recently, in order to amplify optically a signal light directly and to improve the transmission distance of the signal light, an optical fibre amplifier, whose cores are doped with rare earth ions such as Er³⁺ and Nd³⁺ (an optical fibre amplifier an alias) is required and is essential in an optical communication system which can communicate over a long distance and has a mass storage.

However, an optical fibre amplifier outputs high power light; therefore, it may decade or destroy optical components which are located on a transmission line during an operating step. This may be a primary factor in the degradation of the stability and reliability of an optical communication system.

Secondary generating optical surges are one of the primary degradation factors of optical components in an optical amplification system when signal light is input to an optical fibre amplifier. When an optical fibre amplifier is excited by an exciting light having a shorter wavelength than that of the signal light, the signal light is not input thereto, and the rare earth ions of high excitation level are stored in the optical fibre amplifier. When the signal light input to the optical fibre amplifier is in this condition, the stored high level energy suddenly undergoes induced-emission.

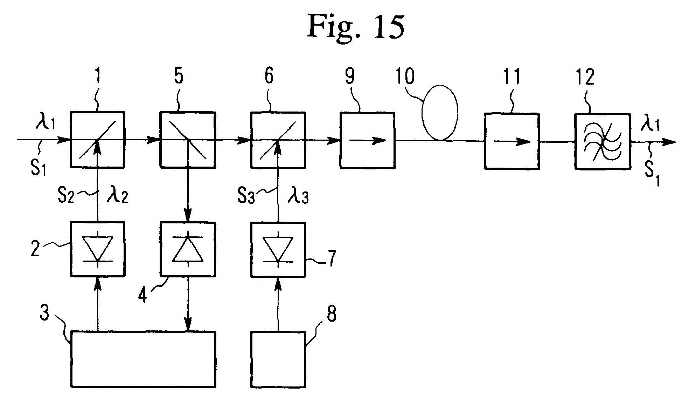

A previously proposed arrangement which has aimed to minimise the effect of these optical surges will now be described with reference to the block schematic diagram shown in Figure 15 of the accompanying drawings.

Figure 15 shows the optical fibre amplifier disclosed in the specification of Japanese Patent Application, First Publication No. Hei 06-216452. This optical fibre amplifier includes an optical multiplexer 1, a semiconductor laser emitting apparatus 2 which emits dummy- light, a control means 3 for the semiconductor laser emitting apparatus 2, a light receiving device 4, an optical branching device 5, an optical multiplexer 6 for the multiplication of the signal light and the dummy-light, a semiconductor laser emitting apparatus 7 emitting excited light, a driving circuit 8 for a semiconductor laser emitting apparatus 7, optical isolators 9, 11, a light amplification portion 10 of a rare-earth element doped optical fibre, and an optical filter 12.

When input signal light S₁ having a wavelength of λ₁ is to be amplified in this optical fibre amplifier, input signal light S₁ is combined with dummy-light S₂ having a wavelength of λ₂ which is different from the wavelength λ₁ of the input signal light S₁ at the start of the optical amplification process. Then, the power of the dummy-light S₂ is controlled so that the total amount of power between the input signal light S₁ and the dummy-light S₂ is fixed. A part of the transmission power of the combined light is branched from the optical branching device 5, and is subjected to an optical/electrical conversion (O/E conversion) by the light receiving device 4. The residue of the combined light is input to the optical multiplexer 6. The control means 3 for the semiconductor laser emitting apparatus 2 which emits dummy-light provides feed-back to the semiconductor laser emitting apparatus 2 which emits the dummy-light so as to fix the voltage value obtained by the O/E conversion. Excited light S₃ having a wavelength of λ₃ is output from the semiconductor laser emitting apparatus 7 and is combined with the input signal light S₁ and the dummy-light S₂ in the optical multiplexer 6. The combined light is input to the light amplification portion 10 of the rare-earth element doped optical fibre, via the optical isolator 9. The light amplification portion 10 of the rare-earth element doped optical fibre is excited by the excited light S₃. Thereby the input signal light S₁ and the dummy-light S₂ are amplified in the light amplification portion 10 of the rare-earth element doped optical fibre, the dummy-light S₂ being removed by the optical filter 12, and then only the amplified input signal light S₁ being output.

When the input signal light S₁ is not input into the optical fibre amplifier, the energy stored in the light amplification portion 10 of the rare-earth element doped optical fibre is suddenly subjected to induced-emission; therefore optical surges are generated in this optical fibre amplifier. Accordingly, optical surges are minimised by the incidence of the dummy-light S₂ in the light amplification portion 10 of the rare-earth element doped optical fibre when the input signal light S₁ is not input, and by means of the control the power between the light intensity of the input signal light S₁ and the dummy-light S₂ is fixed.

The light input to the light amplification portion 10 of the rare-earth element doped optical fibre is not subjected to cut off in order to prevent the output of an optical surge in this previously proposed optical fibre amplifier. Therefore, the optical surge is not restricted. Accordingly, this previously proposed optical fibre amplifier has the problem that it is not possible to control the power of the generated optical surge. In addition, this previously proposed optical fibre amplifier has many components, and its reliability is more prone to deterioration.

In particular, the optically active components, such as a laser photogenic organ, have a relatively poor reliability parameter (called the FIT value). It is preferable that the generation of the dummy-light which is not essential be prevented, and that the number of the components be reduced particularly when used in an undersea repeater, which is preferably has a higher level of reliability than that of a land-based repeater.

Features of a light limiter which is able to control the power of a generated optical surge, and which is to be described below, by way of example in illustration of the invention, are that it has a small number of components, and a comparatively high reliability.

In a particular arrangement to be described below by way of example in illustration of the present invention a light limiter has a parametric amplification element for parametrically amplifying an input signal light, and a wavelength selection element for removing a wavelength component excepting a specific wavelength from the signal light output from the parametric amplification element.

The following description and drawings disclose, by means of examples, the invention which is characterised in the appended claims, whose terms determine the extent of the protection conferred hereby.

In the drawings:-
Figure 1 is a block schematic diagram showing one form of light limiter,
Figure 2 is a block schematic diagram showing another form of light limiter,
Figure 3 is a block schematic diagram illustrating an experimental system for the investigation of the optical properties of a light limiter,
Figure 4 is a graph illustrating the optical spectrum waveform output from a optical amplifier before transmission in a dispersion-shifted optical fibre,
Figure 5 is a graph showing the optical spectrum of an optical surge having a peak power of 400 mW after transmission over 16 km of a dispersion-shifted optical fibre,
Figure 6 is a graph showing the optical spectrum of an optical surge having a peak power of 800 mW after transmission over 16 km of a dispersion-shifted optical fibre,
Figure 7 is a graph showing the optical spectrum of an optical surge having a peak power of 2180mw after transmission over 16 km of a dispersion-shifted optical fibre,
Figure 8 is a graph showing the optical spectrum of an optical surge after transmission over 16 km of a dispersion-shifted optical fibre and passage through an optical filter,
Figure 9 is a graph showing the waveform change of an optical surge in the output portion of an optical amplifier as a function of time,
Figure 10 is a graph showing the waveform change of an optical surge as a function of time, when transmitted over 8 km of a dispersion-shifted optical fibre, passed through an optical filter, and output,
Figure 11 is a graph showing the waveform change of a optical surge as a function of time, when transmitted over 16 km of a dispersion-shifted optical fibre, passed through an optical filter, and output,
Figure 12 is a graph showing the waveform change of an optical surge as a function of time, when transmitted over 24 km of a dispersion-shifted optical fibre, passed through an optical filter, and output,
Figure 13 is a graph showing the input-output relationship of optical surge peak power, and
Figure 14 is a graph showing the insertion loss in relation to the input optical surge peak.

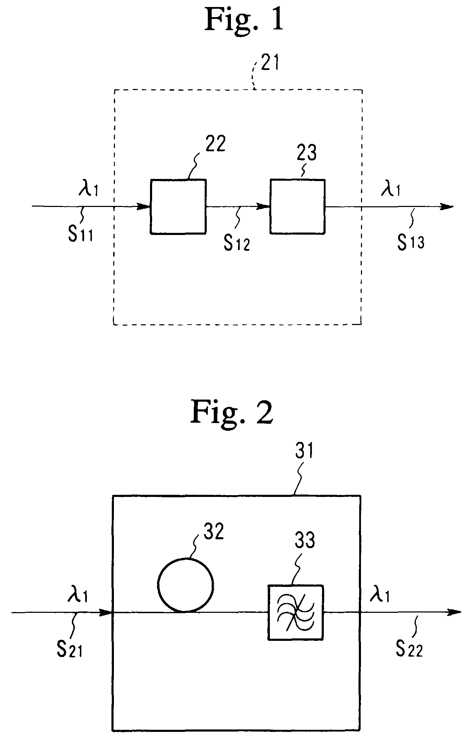

Referring to Fig. 1, there is shown a light limiter 21 which includes a parametric amplification element 22 and a wavelength selection element 23. In this light limiter 21, the loss of the light may be varied by changing the input light power, and by controlling the output light power the incidence of signal light having an excessive power for the optical components can be avoided.

The parametric amplification element 22 has optical fibres such as a dispersion-shifted optical fibre (DSF) and a dispersion-flat optical fibre. This parametric amplification element 22 induces the parametric gain by input signal light S₁₁ having a wavelength of λ₁.

The wavelength selection element 23 is a dielectric multilayer optical filter, and it removes the wavelength component, except for a specified wavelength from among the amplified signal light S₁₂ output from the parametric amplification element 22, and outputs only signal light S₁₃ having the specified wavelength of λ₁.

This light limiter 21 amplifies optical noise having a wavelength near to the wavelength λ₁ of the input signal light S₁₁. For example, it amplifies a spontaneously emitted light (abbreviated as ASE light) output from the optical fibre amplifier. That is, the signal light power is converted to optical noise having a wavelength near to the wavelength λ₁ of the input signal light S₁₁; therefore, the optical spectral band-width becomes wide. When the signal light power incident to the parametric amplification element 22 becomes larger, the optical spectral band width becomes wider. Moreover, when the transmission length of the parametric amplification element 22 is larger, the optical spectral band width becomes wider. Therefore, when the optical power components excepting the wavelength λ₁ of the input signal light S₁₁ which are converted to the optical noise by the wavelength selection element 23, are removed, the insertion loss increases. Accordingly, when the excessive power signal light S₁₁ is incident, the optical power of the signal light S₁₃ output from the light limiter 21 is saturated, and restricted; therefore, the likelihood of damage to the optical components located in the next step can be minimised.

Reference will now be made to Figure 2 in which there is shown a light limiter 31 which includes a dispersion-shifted optical fibre (DSF) 32 having a zero-dispersion wavelength of 1551 nm, a transmission loss of 0.2 dB/km, a length of 16 km, and a mode field diameter (MDF) of 8 µm, and an optical filter 33 having a loss of 3 dB, a bandwidth of 0.3 nm, and a primary Butterworth form which transmits only the signal light component from among the increased optical spectral band width.

In theory, when the wavelength λ₁ of the input signal light S₂₁ is in the negative dispersion region, that is it is shorter than the zero-dispersion wavelength of the dispersion-shifted optical fibre 32, the phase matching conditions for the inducement of parametric gain cannot be obtained. Therefore, it is necessary that the dispersion value of the dispersion-shifted optical fibre 32 in the wavelength range used be in the positive dispersion region, that is it is longer than the zero-dispersion wavelength of the dispersion-shifted optical fibre 32.

However, in practice, the dispersion-shifted optical fibre 32 has a dispersion value on the longitudinal axis thereof; therefore, when the dispersion value of the dispersion shifted optical fibre 32 is near the zero-dispersion wavelength thereof; parametric gain can be obtained. Accordingly, the optical fibre 32 used in this arrangement has an approximately zero-dispersion in the wavelength range employed.

When the signal light S₂₁ having a wavelength λ₁ of 1556 nm, which is near to the zero-dispersion wavelength, is incident to the dispersion-shifted optical fibre 32, the signal light S₂₁ and the ASE light amplified by the optical amplifier in the proceeding step can realize the phase matching conditions for the inducement of parametric gain, and then generate parametric amplification which is one of the non-linear optical effects in the dispersion-shifted optical fibre 32. Moreover, the wavelength band of the aforementioned ASE light is wide.

Therefore, the intensity of the wavelength λ₁ of the signal light S₂₁ decreases when the signal light S₂₁ is transmitted into the dispersion-shifted optical fibre 32. The ASE light is parametrically amplified, and the optical spectrum consequently increases. That is, the dispersion-shifted optical fibre 32 converts the signal light power to the wavelength range near to the wavelength λ₁ of the signal light S₂₁ and works as a parametric amplification element increasing the optical spectral band width. The signal light S₂₂ which has a wavelength of λ₁ is emitted by removing the wavelength component, except a specified wavelength by the optical filter 33, from among the signal light S₂₁ having the increased spectral band-width.

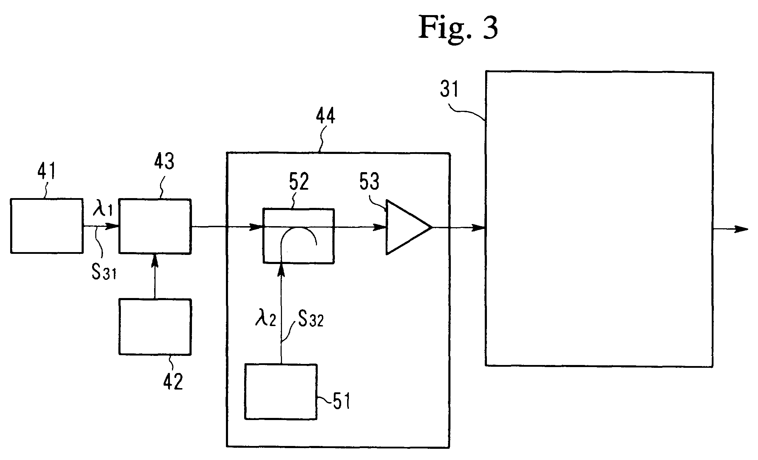

Figure 3 shows an experimental system for the investigation of the optical properties of a light limiter. This experimental system has a signal light source 41 which is a dispersion-feedback type laser (MQW-DFB-LD) having a multiplex quantum well structure and which emits the signal light S₃₁ having a wavelength of λ₁, an oscillator 42, an acousto-optical switch (O/A switch) 43, an optical amplifier 44, and a fight limiter 31 which is the object to be measured.

The optical amplifier 44 has an excitation light source 51 including a semiconductor laser, an optical multiplexer 52 for multiplexing the excited light S₃₂ having a wavelength of λ₂ emitted from the excitation light source 51 which has a semiconductor laser and the signal light S₃₁ emitted from the acousto-optical switch 43, and Er³⁺ doped optical fibre amplifier (EDFA) 53.

In this experimental system, the excited light S₃₂ having a wavelength of λ₂, 1460 nm is emitted from the excitation light source 51 including a semiconductor laser incident to the EDFA 53, via the optical multiplexer 52; therefore, the EDFA 53 is in an excited condition. Moreover, the output power of the optical amplifier 44 is restricted so as to be +6 dBm in a stationary state. The signal light S₃₁ having a wavelength of λ₁, 1556 nm is emitted from the signal light source 41 and is input to the acousto-optical switch 43. The transmission light of the acousto-optical switch 43 is turned ON/OFF by outputting a rectangular modulating signal having a frequency of 10 Hz from the oscillator 42. When the intermittent light is incident to the optical amplifier 44 for the duration of these steps, the signal light having an optical surge is output from the optical amplifier 44, as stated above, and is incident to the light limiter 31.

Experiments were carried out to confirm the operation and effects for the light limiter 31 (21) of the arrangements described above by means of this experimental system.

The experiments confirm that the optical spectral band-width is increased by the parametric amplification in the dispersion-shifted optical fibre 32 by exchanging the optical surge peak power. The inhibiting effect for the optical surge peak was examined by varying the fibre length of dispersion-shifted optical fibre 32, and then the most suitable length thereof was examined. In addition, in order to confirm quantitatively the inhibiting effect, the efficiency of the light limiter 31(21) of these arrangements was examined by measuring the attenuation characteristics and input/output characteristics of the optical surge peak power.

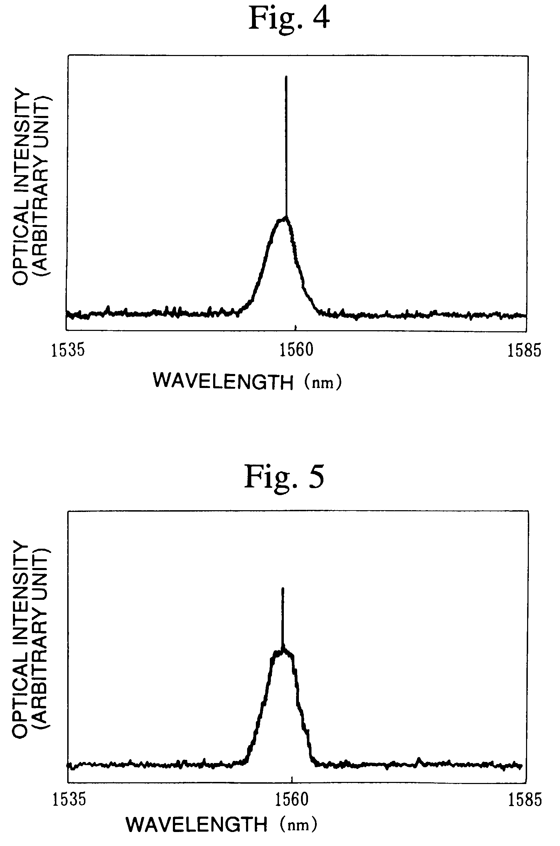

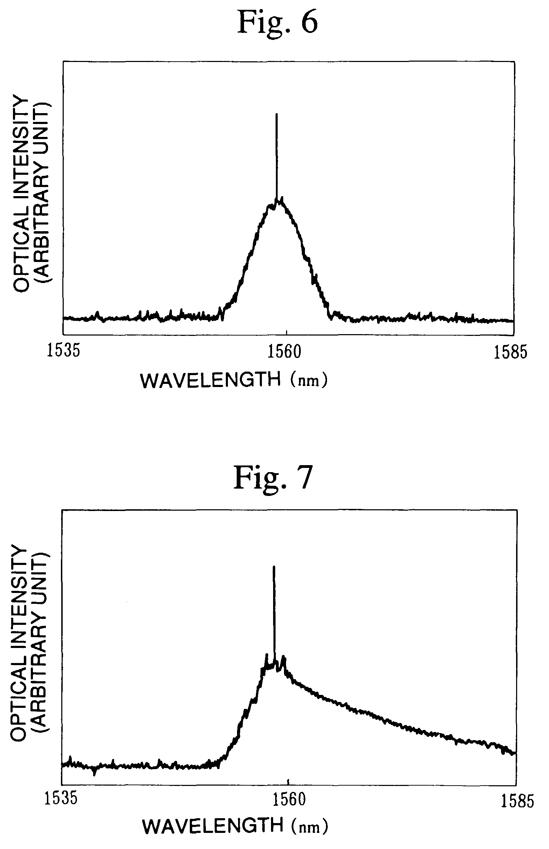

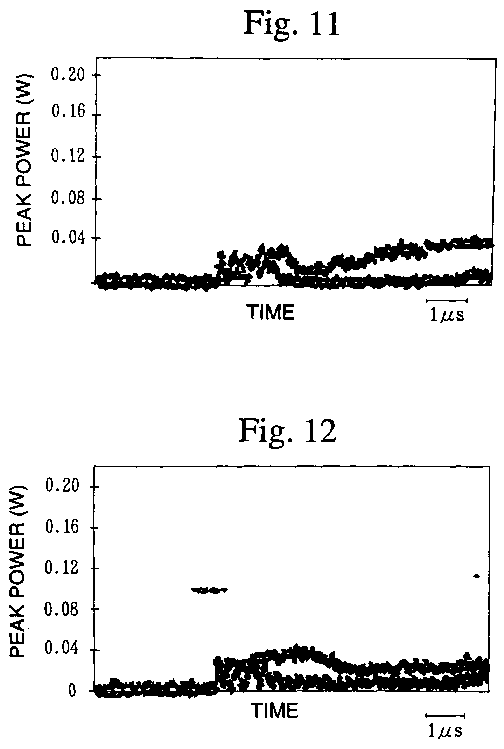

These experimental results are shown in Figures 4 to 14.

Figures 4 to 8 show that the optical spectral band width is increased by the parametric amplification. In addition, Figure 4 shows the optical waveform output from the optical amplifier 44 before transmission in a dispersion-shifted optical fibre 32. The light having a peak wavelength at 1556 nm is the amplified signal light, and the optical spectra having a wide-band excepting the peak wavelength of 1556 nm are ASE light.

Figures 5 to 7 show the optical spectrum after a transmission over 16 km in a dispersion-shifted optical fibre 32 when the optical surge peak power output from the optical amplifier 44 was varied. In addition, Figures 5 to 7 show the optical spectrum of the optical surge having a peak power of 400mW, 800 mw, and 2180 mW, respectively.

It can be understood from Figures 5 to 7 that as the optical surge having a high output induces the parametric gain of the dispersion-shifted optical fibre 32, the wavelength components near to the signal light increases. In addition, the effect of a increase in the optical spectrum by the parametric amplification increases depending on the increase of the optical surge peak power input to the dispersion-shifted optical fibre 32.

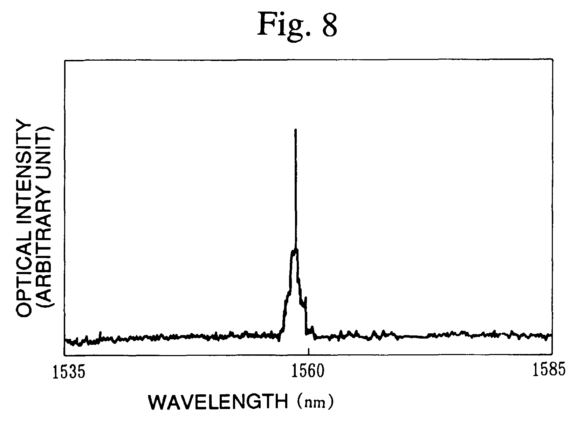

Figure 8 shows the optical spectrum of the optical surge passing through the optical filter 33 having the transmission wavelength band of 0.3 nm after transmission over 16 km in a dispersion-shifted optical fibre 32. It is clear from Figure 8 that the light power except the signal light component is removed by the optical filter 33.

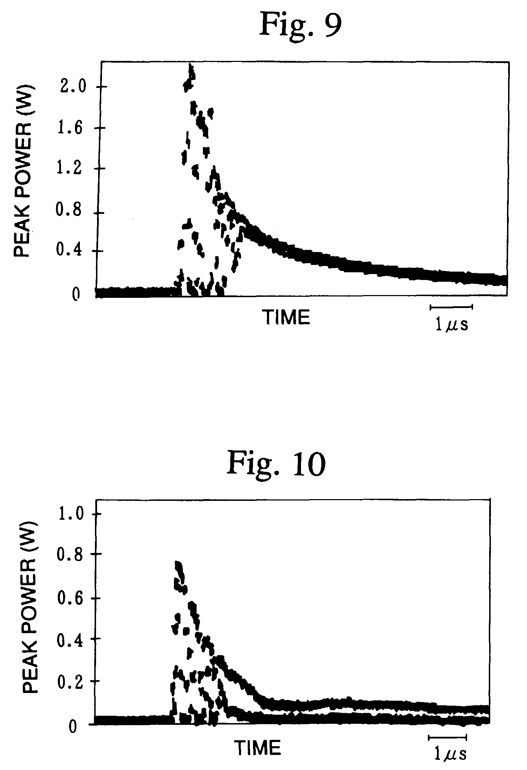

Figure 9 shows the change in the optical surge waveform in the output portion of the optical amplifier 44 as a function of time. It is clear from Figure 9 that when the intermittent light from the acousto-optical switch 43 is amplified, the optical surge is generated the instant that the signal light is input. This fact can be confirmed again. Moreover, the optical surge peak power is 2000 mW.

Figures 10 to 12 show the change in the optical surge waveform at the output portion of the optical filter as a function of time. In these Figures, the waveform of the optical surge which is emitted from the optical amplifier 44, transmitted in the dispersion-shifted optical fibre 32, and passed through the optical filter 33 having a transmission wavelength band of 0.3 nm, was examined by changing the length of the dispersion-shifted optical fibre 32. Figures 10 to 12 show the waveform of the optical surge after a transmission of 8 km, 16 km, and 24 km, respectively.

It is clear from these Figures that the dispersion-shifted optical fibre 32 having a length of 8 km cannot sufficiently inhibit the input optical surge having a peak power of 2000 mW. In addition, in order sufficiently to inhibit the input optical surge, the length of the dispersion-shifted optical fibre 32 must be more than 16 km. When the length of the dispersion-shifted optical fibre 32 is 16 km, the optical peak power is reduced to approximately 1/50.

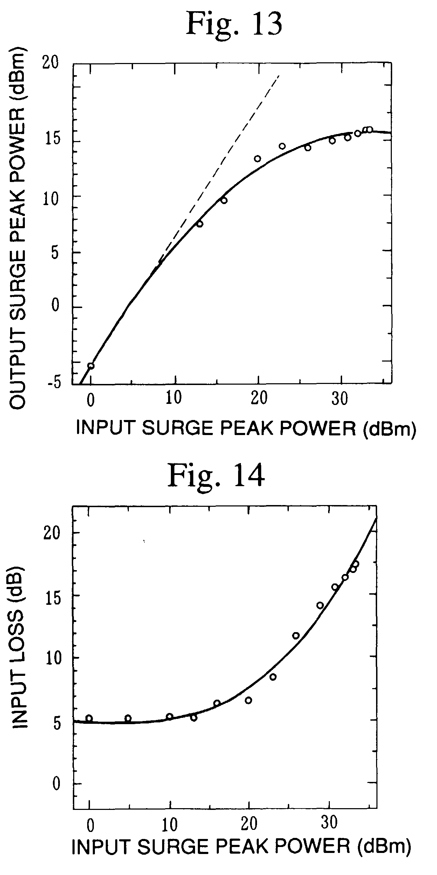

Figure 13 shows the input-output characteristics of the optical surge peak power. It is clear from Figure 13 that the output peak power is saturated and the peak power over +16dBm is not transmitted to the next step.

Figure 14 shows the insertion loss against the peak power of the input light surge. It is clear from Figure 14 that when the input optical surge peak power is +20 dBm or less, the insertion loss is fixed at 5.2dB; however, when the input optical surge peak power is +20 dBm or more, the insertion loss increases; therefore, the light limiter works satisfactorily.

As stated above, the signal light power is power-converted to the optical noise having a wavelength near to the signal light, the optical spectral band width is increased, and then the wavelength component, except the signal light, is removed by the optical filter 33 by use of parametric amplification in the dispersion-shifted optical fibre 32 in the light limiters of these arrangements. Therefore, it can control an optical surge, which would otherwise damage or degrade the system components, such as receiving light.

In addition, when the input power of the signal light is larger, the optical spectral band-width becomes wider. However, when the widened optical spectral band-width of the signal light is less than the transmission band range of the optical filter 33, the signal light can transmit via the optical filter 33. That is, when the input power of the signal light is not large, the amount of attenuation of the signal light power is small; therefore, the influence on the signal light can be reduced.

The optical filter 33 having a transmission wavelength band of 0.3 nm is used as a selection element for selecting only the signal light component from among the increased optical spectra after transmission in the dispersion-shifted optical fibre 32 in these arrangements. However, the optical circulator and the optical fibre grating which have wavelength selection characteristics determined by treating a core portion, that is, a waveguide portion of an optical fibre so as to periodically convert the refractive index thereof, instead of the optical filter 33. In addition, a Fabry-Perot etalon filter, in which periodically transmitting wavelengths appear, can be also used.

Recently, the wavelength multiplex transmission system (WDM system) which increases the transmission capacity has come to attention. When the transmission wavelength of the Fabry-Perot etalon filter is controlled so as to correspond to the signal light wavelength of International Standard which is used in the WDM system, the light limiters of these arrangements can be independently applied to all signal light wavelengths using the WDM systems.

A dispersion-shifted optical fibre 32 having a zero-dispersion wavelength near to the signal light wavelength is used as a parametric amplification element in these arrangements; however, the waveguide type optical devices provided with the nonlinear optical crystal selected from the group consisting of KTiOPO₄, KTiOAsO₄, β-BaB₂O₄, and LiNbO₃ can also be used.

It will be understood that, although the invention has been described, by way of example with reference to the particular arrangements, variations and modifications thereof, as well as other arrangements may be made within the scope of the appended claims.

## Claims

1. A light limiter including
a parametric amplification element for parametrically amplifying an input signal light, and
a wavelength selection element for removing a wavelength component excepting a specified wavelength, from among the signal light output from the parametric amplification element.

2. A light limiter as claimed in Claim 1, wherein the parametric amplification element is an optical fibre.

3. A light limiter as claimed in Claim 2, wherein the optical fibre is an optical fibre selected from the group consisting of a dispersion-shifted optical fibre and a dispersion- flat optical fibre.

4. A light limiter as claimed in Claim 1, wherein the parametric amplification element is an optical waveguide element provided with a nonlinear optical material.

5. A light limiter as claimed in Claim 4, wherein the nonlinear optical material is a material selected from the group consisting of KTiOPO₄, KtiOAsO₄, β-BaB₂O₄, and LiNbO₃.

6. A light limiter as claimed in Claim 1, wherein the wavelength selection element is an optical filter.

7. A light limiter as claimed in Claim 6, wherein the optical filter is a dielectric multilayer optical filter.

8. A light limiter as claimed in Claim 1, wherein the wavelength selection element includes an optical circulator and an optical fibre grating.

9. A light limiter as claimed in Claim 1, wherein the wavelength selection element is a Fabry-Perot etalon filter.
